# EUROPEAN PATENT SPECIFICATION

(11) **EP 0 758 948 B1**
(45) Date of publication and mention of the grant of the patent: **04.10.2001**
(21) Application number: 95919709.6
(22) Date of filing: 09.05.1995
(51) Int. Cl.: B29C 45/17, B29C 33/30, B22D 17/26

(54) **APPARATUS FOR INJECTION-MOULDING OR DEFORMATION OF WORK PIECES**
VORRICHTUNG ZUM SPRITZGIESSEN ODER VERFORMEN VON WERKSTÜCKEN
DISPOSITIF DE MONTAGE PAR INJECTION OU DE DEFORMATION DE PIECES

(30) Priority: 11.05.1994 SE 9401659
(43) Date of publication of application: 26.02.1997
(73) Proprietor: INSTITUTET FÖR VERKSTADSTEKNISK FORSKNING, S-431 53 Mölndal (SE)
(72) Inventor: PALMERS, Göran, 436 39 Askim (SE)
(74) Representative: Roth, Ernst Adolf Michael
(86) International application number: PCT/SE95/00507
(87) International publication number: WO 95/31322

(56) References cited:
- DE-A- 3 435 805
- DE-C- 3 626 019
- US-A- 4 348 165
- US-A- 4 422 995
- US-A- 4 500 274
- US-A- 4 555 228
- US-A- 4 810 181
- US-A- 4 959 002
- PATENT ABSTRACTS OF JAPAN, Vol. 14, No. 399, M-1017; & JP,A,02 151 414 (MURATA MFG CO LTD), 11 June 1990.

## Description

### FIELD OF THE INVENTION

The present invention relates to an apparatus for injection moulding or forming work pieces inside a moulding tool having two or more tool pieces, comprising at least one press means for locking the moulding tool, acting between support surfaces in a frame and the moulding tool. Also, the invention relates to a method for locking moulding tools during injection moulding.

### BACKGROUND OF THE INVENTION

For example, during injection moulding or hydromechanical forming, large presses designed for press forces in the range of several thousand tonnes are employed for opening and closing and pressing together and locking the moulding tool halves. Presses for that use are expensive and are requiring much space. Because they are large, the forces also have to travel far. This leads to elongation which cost a lot of energy to work off, or to compensate for.

When forming closed profiles, e.g. pipes, the profile is put into a tool which is subsequently locked. Then a pressure medium is supplied internally to the profile, which is blown up until it adapts to the inner surface of the moulding tool. It is advantageous if several work pieces can be worked simultaneously in one moulding tool, which naturally raises the demands upon the locking of the moulding tool.

### TECHNICAL PROBLEM

One object of the present invention is therefore to provide an efficient apparatus for forming tubular work pieces, which apparatus is considerably less expensive and less space consuming than prior art press apparatuses.

### THE SOLUTION

The apparatus according to the invention is characterized in that the press means has a short stroke and a high press force, and that the tool pieces of the moulding tool exclusively are insertable in an assembled condition into an inner space in the frame, wherein formstripping exclusively takes place outside the press means. According to the method, the tool parts of the moulding tool are assembled outside a space, in which the moulding tool is locked and the injection material is supplied.

### BRIEF DESCRIPTION OF THE DRAWINGS

The invention will now be described with reference to the accompanying drawings, in which
- Fig. 1: in a perspective view shows an according to a first embodiment the invention designed apparatus for locking moulding tool halves,
- Fig. 2: is an end view of an alternative design of the embodiment according to the invention,
- Fig. 3: is a section along the line III-III in Fig. 2,
- Fig. 4: schematically in a side view shows hydraulic pistons for controlling locking of the tool halves,
- Fig. 5: schematically in a plane view shows the hydraulic pistons in Fig. 4,
- Fig. 6: shows an example of a moulding tool half in a plane view, and
- Fig. 7: in a larger scale shows a connection means which is used in the moulding tool half.

### DESCRIPTION OF A PREFERRED EMBODIMENT

The apparatus according to the invention is adaptable to many different purposes and fields of use. Hereinafter, two embodiments will be described, but the man in the field will realise that different modifications lie within the scope of the invention as defined in the claims.

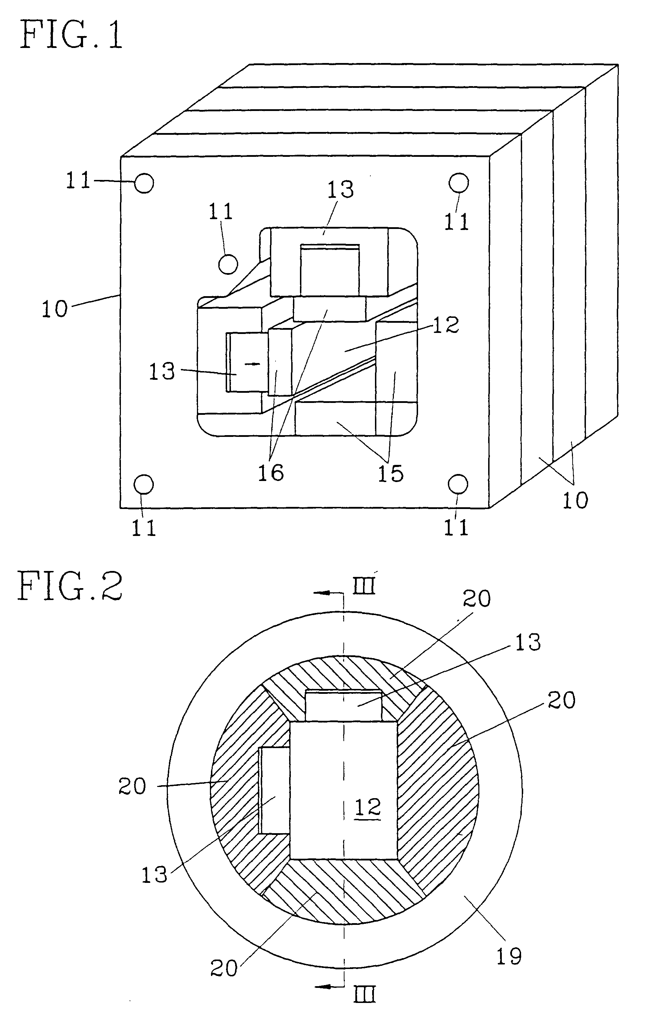

Fig. 1 shows a first embodiment of the invention where a number of quadratic plates 10 are placed closely together in a stack. The plates 10 can have varying thicknesses. They are held together by means of five not shown pull rods which can be passed through five holes 11.

The plates 10 do not have to be quadratic, but they can have any other multi-sided, oblong or round form, and they can be held together by means of more or fewer pull rods than five, which are placed in such a way that the press force from the pull rods are distributed as evenly as possible over the surface.

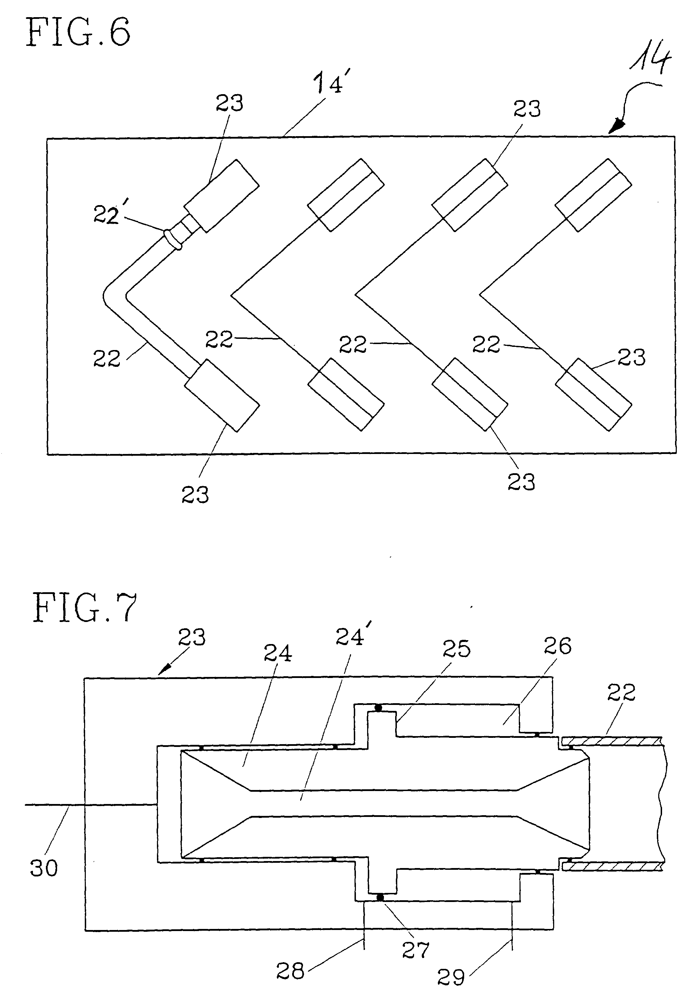

An opening 12 is cut out centrally in the plates 10, in such a way that they cooperate to for a frame with a substantially quadratic opening space, one of the corners of which is rounded. The opening 12 is so dimensioned, that the space on one hand houses two at an angle of 90° towards each other acting, in Fig. 1 schematically shown press means 13, and on the other hand two or more in said angle insertable moulding tool halves 14, see Fig. 6. However, the space is not larger than that the moulding tool must be pulled out of the opening for opening and closing the tool halves, i.e. for insertion or withdrawal of the work piece. Each press means 13 work against an anvil plate 15 which can be exchangeable for adaption to the moulding tool.

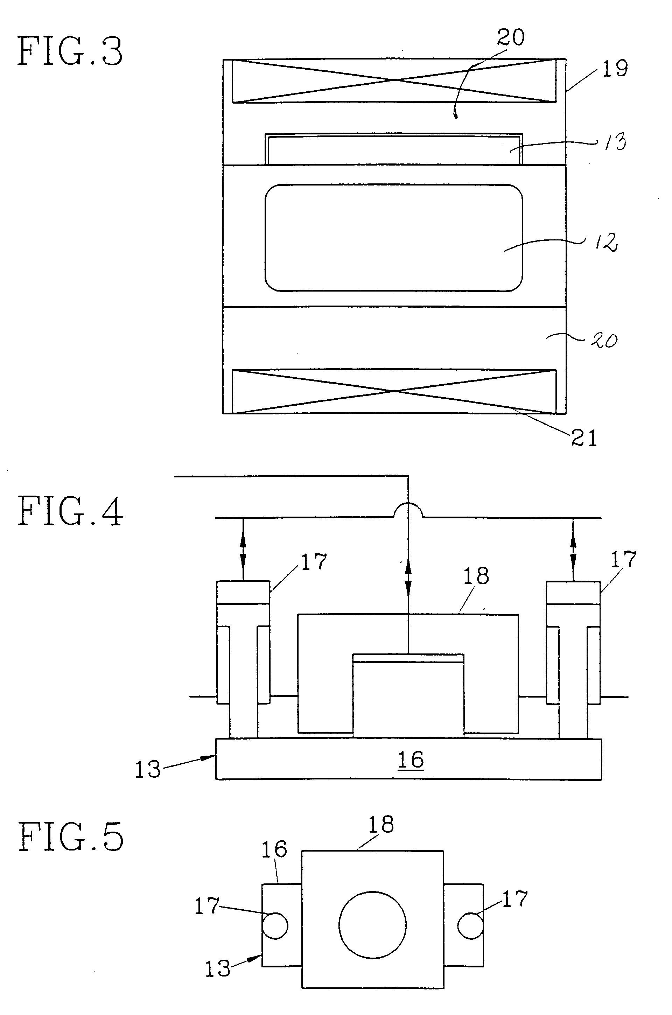

Fig. 4 and 5 shows a press means 13, from which it is clear that it comprises a press plate 16 which is manoeuvrable, partly by means of the two at the side arranged hydraulic pistons 17, and partly a centrally disposed, considerably more powerful piston 18. Preferably, the piston 18 is used for pressing and locking the moulding tool, and the pistons 17 are used for pulling the press plate 16 from the moulding tool. Alternatively, all three pistons can be used for generating press force.

For example, the piston 18 at one of the press means 13 can be dimensioned for a press force of 300 tonnes, while the piston 18 of the other press means 13 can be dimensioned for a press force of 500 tonnes. The space for the moulding tool 14 can then have the following approximate dimensions: 300 x 400 x 1000 mm.

In the embodiment shown in Fig. 2 and 3, a cylindric pipe 19 is used as a frame, together with four into the pipe 19 insertable filling up inserts 20 as anvil for the press means 13, instead for the in Fig. 1 transversely to the longitudinal axes of the press means 13 and the moulding tool arranged plates 10. The pipe 19 can be wound with a high tensile wire 21 which creates an inner pretensioning of the frame.

Fig. 6 shows one of the halves 14' of a moulding tool 14, from which it is clear that the moulding tool is designed for simultaneous forming of four work pieces 22, in one single work cycle. In this special embodiment, the pipes shall be provided with an enlarged part 22'. The energy for forming the work pieces 22 is supplied hydro-mechanically by means of a water pressure which is supplied to each of the work pieces by means of connection means 23 attached to the moulding tool. These are according to prior art connected via not shown conduits to a pump which generates pressure impulses.

At both of the two above described press apparatuses, the moulding tool can be pushed into or be withdrawn from two opposed directions which reduces setup time considerably, because emptying of fluid from a moulding tool can be effectuated outside the press apparatus.

It is possible to provide the frame elements 10, 19 with closures at both ends, which closures cooperate with the frame elements for locking the moulding tool. One or both of the closures can be provided with additional press means 13, so that press force can be applied from at least three different, substantially right angles to each other.

A connection means 23 is shown in larger scale in Fig. 7, from which it is clear that it is provided with an inner displaceable part 24 which protrudes for some distance with a sealing ring into the end of the work piece. The part 24 is provided with a conduit 24' for the hydro-mechanical medium and a piston flange 25 which is displaceable within a cylindric space 26 in the connection 23. The piston flange 25 is provided with a sealing ring 27 which abuts the cylinder wall.

The displaceable part 24 can be manoeuvred in one direction or the other, because each side of the piston flange 25 communicates via conduit 28, 29 with an controllable pressure medium. In this way, the sealing towards the end of the work piece can be maintained by compensation for length changes at the work piece, e.g. as a result of the enlarged part 22'. This compensation is made with balanced pressure because both the small ends of the displaceable part (equally large surfaces) are subjected to the form changing pressure medium via the pressure medium connection 30.

Alternatively, the pressure medium connection 30 can be directly connected to the displaceable part 24 via a not shown, preferably slim piston rod which protrudes through the end wall of the connection means.

Because the moulding tool can be opened and closed outside the apparatus according to the invention, pressure means can be used which working stroke can amount to about 30 mm. With such a short stroke, the apparatus can be made very compact and cost efficient in spite of high pressure forces.

Preferably, the apparatus according to the invention is provided with a surveillance system with sensors adapted for sensing different parameters with reference to safety and to production quality during a work cycle. For example, these parameters can be related to dimensional changes in the work piece with reference to the supplied force. Also, other parameters like noise, vibrations and temperature can be registered. All measurements can be data processed in real time, so that the work cycle can be interrupted when a fault is registered.

The invention is not limited to the above described embodiments, but several variations are conceivable within the scope of the accompanying claims. For example, the moulding tool 14 can be made up of more parts than two. The apparatus can be used both for injection moulding of plastics or some metal, and for hydrostatic forming. The connection means for pressure medium or for supply of material can be located on the moulding tool, or they can be arranged separately as a dockable unit.

## Claims

1. An apparatus for injection moulding, or forming of work pieces (22) by means of hydroforming inside a moulding tool (14) having two or more tool pieces, comprising at least one press means (13) for locking the moulding tool, acting between support surfaces in a frame (10; 19) and the moulding tool,
**characterized in**
**that** the tool pieces of the moulding tool (14) exclusively are insertable in an assembled condition into an inner space (12) in the frame (10; 19) which frame constitutes an enclosing circumference around the moulding tool and the press means (13), for locking of the moulding tool during operation under high pressure force, wherein formstripping exclusively takes place outside the press means.

2. Apparatus according to claim 1, wherein the moulding tool (14) is provided with connection means (23) for supply of a pressure medium to the inner of one or more tubular work pieces (22)

3. Apparatus according to claim 1, wherein a dockable unit is used for supplying the hydrostatic pressure medium to the moulding tool (14) for forming one or more work pieces (22).

4. Apparatus according to claim 2, wherein the respective connection means (23) comprises an displaceable part (24) which enables compensation and guiding for alterations in length at a work piece (22).

5. Apparatus according to claim 4,
wherein the hydrostatic pressure medium connection (30) of the connection means (23) is hydraulically connected to the displaceable part (24) in such a way that two opposed sides of the displaceable part are influenced by the hydrostatic pressure medium.

6. Apparatus according to claim 4, wherein the pressure medium connection (30) of the connection means (23) is mounted directly upon the displaceable part (24).

7. Apparatus according to claim 4, wherein the pressure medium connection (30) of the connection means (23) is mounted upon a piston rod which is connected to the displaceable part (24) which rod protrudes out through an end piece on the pressure medium connection (30).

8. Apparatus according to one or more of the claims 1 to 7, wherein a second pressure means (13) is located in the frame (10; 19) with the direction of press orientated substantially transverse to the first press means (13).

9. Apparatus according to claim 8, wherein a third press means (13) is located in the support frame (10; 19) with the direction of press oriented substantially transverse to both first and second press means (13).

10. Apparatus according to any one of claims 1-9, wherein the frame (10) comprises two or more elements which together surround the moulding tool (14) on all sides thereof and defines an inner space (12).

11. Apparatus according to claim 10, wherein the partition plane of the elements is oriented transversely to the main partition plane of the tool halves, and that the elements are provided with through holes (11) for pull rods for contraction and clamping.

12. Apparatus according to claim 10, wherein the element is composed of a cylindrical pipe (19) which encloses the press means and the moulding tool (14).

13. Apparatus according to claim 1, wherein sensors for sensing dimensional changes, noise, vibrations, and temperature, are provided for sensing different parameters with reference to safety and product quality during a work cycle.

14. Apparatus according to claim 1, wherein a moulding tool (14) is insertable into the frame (10; 19) from two, substantially opposite directions.

## Patentansprüche

1. Vorrichtung für das Spritzgießen oder Formen von Werkstücken (22) mittels Hydroforming im Inneren eines Formwerkzeugs (14) mit zwei oder mehr Werkzeugteilen, die zumindest ein Druckmittel (13) für das Verriegeln des Formwerkzeugs umfaßt, das zwischen Auflageflächen in einem Rahmen (10; 19) und dem Formwerkzeug arbeitet, **dadurch gekennzeichnet, daß** die Werkzeugteile des Formwerkzeugs (14) ausschließlich in einem montierten Zustand in einen Innenraum (12) in dem Rahmen (10; 19) einsetzbar sind, wobei der Rahmen, für das Verriegeln des Formwerkzeugs während des Betriebs unter hohem Druck, einen umschließenden Umkreis um das Formwerkzeug und das Druckmittel (13) bildet und wobei das Herausnehmen aus der Form ausschließlich außerhalb des Druckmittels erfolgt.

2. Vorrichtung nach Anspruch 1, **dadurch gekennzeichnet, daß** das Formwerkzeug (14) mit Anschlußmitteln (23) für die Zufuhr eines Druckmediums in das Innere eines oder mehrerer röhrenförmigen/r Werkstücks/e (22) versehen ist.

3. Vorrichtung nach Anspruch 1, **dadurch gekennzeichnet, daß** für die Zufuhr des hydrostatischen Druckmediums zu dem Formwerkzeug (14) für das Formen eines oder mehrerer Werkstücks/e (22) eine ankoppelbare Einheit verwendet wird.

4. Vorrichtung nach Anspruch 2, **dadurch gekennzeichnet, daß** das jeweilige Anschlußmittel (23) einen beweglichen Teil (24) umfaßt, der einen Ausgleich und eine Führung für Längenveränderungen an einem Werkstück (22) ermöglicht.

5. Vorrichtung nach Anspruch 4, **dadurch gekennzeichnet, daß** der Anschluß für das hydrostatische Druckmedium (30) des Anschlußmittels (23) hydraulisch derart mit dem beweglichen Teil (24) verbunden ist, **daß** zwei einander entgegengesetzte Seiten des beweglichen Teils durch das hydrostatische Druckmedium beeinflußt werden.

6. Vorrichtung nach Anspruch 4, **dadurch gekennzeichnet, daß** der Anschluß für das Druckmedium (30) des Anschlußmittels (23) direkt auf dem beweglichen Teil (24) montiert ist.

7. Vorrichtung nach Anspruch 4, **dadurch gekennzeichnet, daß** der Anschluß für das Druckmedium (30) des Anschlußmittels (23) auf einer Kolbenstange montiert ist, die mit dem beweglichen Teil (24) verbunden ist, wobei die Stange durch ein Endstück an dem Anschluß für das Druckmedium (30) nach außen hinausragt.

8. Vorrichtung nach einem oder mehreren der Ansprüche 1 bis 7, **dadurch gekennzeichnet, daß** ein zweites Druckmittel (13) in dem Rahmen (10; 19) angeordnet ist, wobei die Druckrichtung im wesentlichen quer zum ersten Druckmittel (13) verläuft.

9. Vorrichtung nach Anspruch 8, **dadurch gekennzeichnet, daß** ein drittes Druckmittel (13) in dem Halterahmen (10; 19) angeordnet ist, wobei die Druckrichtung im wesentlichen quer zum ersten als auch zum zweiten Druckmittel (13) verläuft.

10. Vorrichtung nach einem der Ansprüche 1 - 9, **dadurch gekennzeichnet, daß** der Rahmen (10) zwei oder mehr Elemente umfaßt, die zusammen das Formwerkzeug (14) auf allen Seiten desselben umgeben, und einen Innenraum (12) definiert.

11. Vorrichtung nach Anspruch 10, **dadurch gekennzeichnet, daß** die Teilungsebene der Elemente quer zur Hauptteilungsebene der Werkzeughälften verläuft und **daß** die Elemente mit Durchgangslöchern (11) für Zugstangen für das Zusammenziehen und Festklemmen versehen sind.

12. Vorrichtung nach Anspruch 10, **dadurch gekennzeichnet, daß** das Element aus einem zylindrischen Rohr (19) besteht, welches das Druckmittel und das Formwerkzeug (14) umschließt.

13. Vorrichtung nach Anspruch 1, **dadurch gekennzeichnet, daß** Sensoren für das Erfassen von Abmessungsänderungen, Geräuschen, Vibrationen und Temperatur vorgesehen sind, um verschiedene Parameter bezüglich der Sicherheit und Produktqualität während eines Arbeitszyklus zu erfassen.

14. Vorrichtung nach Anspruch 1, **dadurch gekennzeichnet, daß** ein Formwerkzeug (14) aus zwei, im wesentlichen entgegengesetzten Richtungen in den Rahmen (10; 19) einsetzbar ist.

## Revendications

1. Appareil de moulage par injection ou de formage de pièces (22) par hydroformage à l'intérieur d'un outil de moulage (14) possédant deux éléments d'outillage ou plus, et comprenant au moins un élément de presse (13) destiné à bloquer l'outil de moulage et agissant entre les surfaces de support d'un cadre (10, 19) et l'outil de moulage,
**caractérisé en ce que** les éléments d'outillage de l'outil de moulage (14) peuvent être introduits pré-assemblés dans un espace intérieur (12) du cadre (10, 19), lequel cadre forme autour de l'outil de moulage et de l'élément de presse (13) une circonférence fermée, afin de verrouiller l'outil de moulage pendant l'utilisation sous haute pression, le démoulage se déroulant exclusivement hors du système de pressage.

2. Appareil selon la revendication 1, dans lequel l'outil de moulage (14) est équipé de raccords (23) amenant le fluide sous pression à l'intérieur d'une ou de plusieurs pièces tubulaires (22).

3. Appareil selon la revendication 1, dans lequel un élément amovible sert à amener le fluide sous pression hydrostatique à l'outil de moulage (14) pour former une ou plusieurs pièces (22).

4. Appareil selon la revendication 2, dans lequel les raccords respectifs (23) comprennent une pièce mobile (24) assurant une compensation et un guidage en cas de changement de la longueur de la pièce à travailler (22).

5. Appareil selon la revendication 4, dans lequel l'arrivée de fluide sous pression hydrostatique (30) du raccord (23) est hydrauliquement reliée à la pièce mobile (24), de telle façon que les deux faces opposées de cette dernière soient sous l'influence de la pression.

6. Appareil selon la revendication 4, dans lequel l'arrivée de fluide sous pression (30) du raccord (23) est montée directement sur la pièce mobile (24).

7. Appareil selon la revendication 4, dans lequel l'arrivée de fluide sous pression (30) du raccord (23) est montée sur une tige de piston reliée à la pièce mobile (24), laquelle tige dépasse de l'extrémité du raccord de fluide sous pression (30).

8. Appareil selon l'une au moins des revendications 1 à 7, dans lequel un deuxième élément de presse (13) est placé dans le cadre (10, 19), son effort de pressage s'exerçant de façon sensiblement perpendiculaire à celui du premier élément de presse (13) .

9. Appareil selon la revendication 8, dans lequel un troisième élément de presse (13) est placé dans le cadre support (10, 19), son effort de pressage s'exerçant de façon sensiblement perpendiculaire à celui du premier et du deuxième éléments (13).

10. Appareil selon l'une quelconque des revendications 1 à 9, dans lequel le cadre (10) comprend deux éléments ou plus, lesquels, ensemble, entourent complètement l'outil de moulage (14), définissant l'espace intérieur (12).

11. Appareil selon la revendication 10, dans lequel le plan de séparation des éléments est orienté tranversalement au plan de séparation principal des coquilles de l'outil, les éléments étant percés de trous traversants (11) recevant les tirants de contraction et de blocage.

12. Appareil selon la revendication 10, dans lequel l'élément est composé d'un tube cylindrique (19) enfermant l'élément de presse et l'outil de moulage (14).

13. Appareil selon la revendication 1, équipé de capteurs de variations dimensionnelles, de bruit, de vibrations et de température détectant pendant le cycle de travail ces différents paramètres liée à la sécurité et à la qualité du produit.

14. Appareil selon la revendication 1, dans lequel un outil de moulage (14) peut être introduit dans le cadre (10, 19) depuis deux directions sensiblement opposées.
